# EUROPEAN PATENT SPECIFICATION

(11) **EP 2 164 318 B1**
(45) Date of publication and mention of the grant of the patent: **03.10.2012**
(21) Application number: 08748817.7
(22) Date of filing: 26.05.2008
(51) Int. Cl.: A01F 25/00, A01F 25/02, A01F 25/16

(54) **EMBEDDED SILAGE SENSOR**
EINGEBETTETER SILAGESENSOR
DÉTECTEUR DE FOURRAGE INCORPORÉ

(30) Priority: 14.06.2007 EP 07011693
(43) Date of publication of application: 24.03.2010
(73) Proprietor: Aarhus Universitet, 8000 Århus C (DK); Teknologisk Institut, 2630 Taastrup (DK)
(72) Inventor: GREEN, Ole, DK-6940 Lem St. (DK); PRANOV, Henrik, Jimenez, 3060 Espergærde (DK)
(74) Representative: Plougmann & Vingtoft A/S
(86) International application number: PCT/DK2008/050118
(87) International publication number: WO 2008/151635

(56) References cited:
- EP-A- 1 667 082
- WO-A-2005/114610
- DE-A1- 3 309 623
- DE-U1-202005 017 113
- FR-A- 2 859 802
- JP-A- 54 096 086
- US-A1- 2006 000 420
- US-A1- 2007 027 403

## Description

### FIELD OF THE INVENTION

The invention relates to a method for sensing physical and/or chemical characteristics within a stack of silage during a conservation and preparation sequence of the silage.

### BACKGROUND OF THE INVENTION

Silage production is with its variety and long growth period a great benefit for the environment and its fauna. A considerable percentage, such as 25%, of the agricultural areas is in some countries used for the production of silage. In the beginning of the eighteenth century an actual silage production began with purposeful plant production with grass from selected species. Before then silage consisted of wild grass and weeds.

The name silage is herein generally applied to fodder, that has a structure suited for feeding animals such as ruminants and that has relatively low energy content. Especially when silage is mixed with further ingredients, the outcome of the mixing may be referred to as coarse fodder.

A large silage production of a high quality, with the aim to use the silage for course fodder, means a high rate of self-sufficiency and a lower need for external transport of silage and fodder both local and globally. The on-farm production of silage and fodder reduces the vulnerability of the farm to price fluctuations of free market silage and/or fodder. An essential condition for exploiting the silage in an optimal way is a high yield of good quality, and subsequent storage that preserves its nutritional.

When silage and/or course fodder has to be stored for a longer time, a conservation of the silage and/or the course fodder is necessary. The storage has to preserve the food value and the nutrient content. Respiration is the primary source of loss and it depends on the supply of oxygen, water and heat. Therefore there are three fundamental ways of conservation, the removal of oxygen, the removal of water and the removal of heat.

A successful silage process is a superior way of preserving grass and corn. The way to success is relatively simple. The goal is to press the oxygen out of the crop as fast as possible and then keep the silage airtight until it is to be used. If oxygen enters the silage a decomposition of digestible matter will start. The decomposition is not easy to see under the cover while the matter is broken down to H₂O and CO₂ with a release of heat during the decomposition.

In practice it has among others been found that existing devices and methods for assuring that the silage and/or the course fodder is well preserved suffers from a number of disadvantages which among others may lead to a silage process which does not always lead to a successful result.

DE202005017113 discloses a data logger which has an outer case around a motion sensor with a battery and a memory device. The data logger is of a size that may be conveniently positioned within a bulk quantity of agricultural products such as potatoes or carrots, and records the sum total of shock motion and vibration to which the bulk load is subjected during transit. The data logger further incorporates a transponder that releases the data to a nearby receiver on receipt of a command signal.

The inventors of the present invention has appreciated that an improved wireless silage sensor unit and method of wirelessly sensing physical and/or chemical characteristics of silage is of benefit, and has in consequence devised the present invention.

### SUMMARY OF THE INVENTION

It may be seen as an object of the present invention to provide an improved method of wirelessly sensing physical and/or chemical characteristics of silage. Preferably, the invention alleviates, mitigates or eliminates one or more of the above or other disadvantages singly or in any combination.

In accordance with the invention there is provided a method of wirelessly sensing physical and/or chemical characteristics of silage with a wireless silage sensor unit in order to determine a quality of the silage, the method including the method steps of
- providing the silage with one or more sensor units, and
- sensing one or more physical and/or the chemical characteristics of the silage with the sensor unit during a conservation period of the silage, and
- wirelessly transmitting the one or more physical and/or the chemical characteristics of the silage in order to determine the quality of the silage, and
- decompacting and possibly mixing the silage and the one or more sensor units with further ingredients in a decompacting process, and
- sorting out the one or more sensor units unbroken after the decompacting process.

By firstly embedding the sensor unit in the silage by providing the silage with one or more sensor units and later sorting out the sensor units a possible advantage may be that a continued assurance of the quality of the silage during a conservation and preparation sequence of the silage can be provided while still not endangering the animals being fed with the silage and while allowing for easy collection of the sensor units.

The collection of the sensor unit can be provided by the animals trying to eat the silage with the embedded sensor units and by the sensors being e.g. sphere shaped with a diameter larger than 0,02 m. The sensors will hereby not be eaten by the animals and can be collected from the fodder troughs. Tin another embodiment the one or more sensor units are collected in a part of the decompacting equipment. This may as an example be provided by fitting a part of the decompacting equipment to the size of the sensor units.

Independent of the collection method, of which collection from the fodder troughs may be preferred, a possibility is that the sensor units can advantageously be reused in order to determine a quality of the silage of further batches of silage.

By wirelessly transmitting and/or sensing the characteristics with a given period of time between each transmission, such as one time every five minutes, one time each half hour or one time each second hour, one may continuously monitor the characteristics of the silage by interpolating between parameters of each of the sensed characteristics.

Thus, in an embodiment of the method according to the invention, a wireless sensor unit is used A possible advantage by using such wireless sensor unit is that a sealing of a silage stack need not be broken as when inserting a wired sensor unit from outside the sealing. Hereby the sealing remains unbroken, it is e.g. also not needed to stand on the sealing and hereby the sealing remains intact and thereby from entering the silage storage. A further possible advantage by such sensor unit used in accordance with an embodiment of the method according to the invention is that this makes it possible to monitor the silage during substantially the whole storage and preparation process.

A further possible advantage by the silage being provided with the sensor unit used in an embodiment of the method according to the invention during storage of the silage, and for the sensor unit to endure a decompacting process of the silage, is that the one or more sensor units can be placed in the silage during forming of a stack of silage and can remain in the silage during the storage period and/or during the decompacting process and/or after the decompacting process, hereby enabling sensing the characteristics of the silage during a complete storage and preparation period of the silage and e.g. not only at moments during the storage period when one or more wired sensor units are present in the silage by inserting a sensor with a spear or similar through a sealing of the stored silage stack and taking out the sensor again after a certain amount of time.

When the size and/or shape of the sensor unit used in an embodiment of the method according to the invention, adapted so as to avoid the sensor unit from being trapped in and/or entering an opening between a moving element and a fixed element within a silage preparation equipment such as a mixer for cutting the silage and/or for decompacting the silage and possibly mixing the silage with further ingredients, a possible advantage is that such size and/or shape prevents the sensor unit from being trapped between the moving element and the fixed element and hereby from being broken into pieces which causes a danger to any animals swallowing the pieces. The moving element may be an element such as a rotating knife positioned in the mixer, a paddle arm in the mixer, a mixer worm or similar. Typically the fixed element is a wall of the mixer or an element fixed to the wall of the mixer and possibly an element cooperating with one or more moving elements.

When the size and/or shape of the sensor unit used in an embodiment of the method according to the invention, is adapted so as to prevent animals from swallowing the sensor unit from the silage when the silage with any further ingredients is used as fodder, a possible advantage is the animals are not endangered by eating the sensor unit. The sensor unit may be sorted out from the fodder trough with help of equipment such as a metal detector or the like equipment.

When the size and/or the form of the sensor unit used in an embodiment of the method according to the invention is adapted so that the volume of the sensor unit is larger than 0,000004m³ is has been found that the sensor unit is not damaged during preparation of the silage in the decompacting/mixing process preparing the silage to be used as fodder, and/or is not swallowed by animals which are fed with the silage.

It has been found that a square box with flat surfaces sometimes can endure some of the equipment used in the preparation process of the silage. The dimensions of the square box may as an example be 0,02m time 0,04m times 0,06m. Though, when the form and/or shape of the sensor unit used in an embodiment of the method according to the invention is substantially a sphere, a possible advantage is that this form is not easily trapped and/or damaged in various preparation equipments of the silage such as a decompaction and/or mixing equipments. Furthermore it has been found that the sphere shape of the sensor unit prevents the sensor unit from being damaged in the decompacting process. This is as an example due to that the knives or rotors of the decompacting equipment will not easily be able to provide a continued and damaging pressure on a sphere shaped sensor unit.

When a diameter of the sphere formed sensor unit is larger than 0,02m. a possible advantage is that this shape and minimum size has been found to prevent animals from swallowing the sensor unit used in an embodiment of the method according to the invention and/or to prevent the sensor unit from entering an opening between a moving element and a fixed element within a mixer for decompacting and possibly mixing the silage with the further ingredients and/or to endure the decompacting process of the silage.

When substantially no free space is provided within the sensor unit used in an embodiment of the method according to the invention and/or any components within the sensor unit are embedded in one or more materials forming the sensor unit and/or any opening in the unit is provided with a size only for enabling sensing the characteristics of the silage, a possible advantage is that a sensor unit which is rather impact proof and/or does not break into a large number of pieces if broken is provided.

In general by writing that it is an advantage' of the present invention and referring to an advantage, it must be understood that this advantage may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 shows sensor units embedded in a stack of silage,
FIG. 2 shows the silage with the sensor units upon the sensor units and silage being loaded to a mixer,
FIG. 3 shows three examples of different mixer types,
FIG. 4 shows a silage quality assurance and quality evaluation system and a schematic cross-sectional view of a sphere formed sensor unit and perspective view of a device for receiving and evaluating characteristics sensed and transmitted by the sensor unit,
FIG. 5 illustrates a size and shape of a sensor unit,
FIG. 6 shows a sensor unit in a fodder trough, and
FIG. 7 illustrates a silage process with sensor units embedded from and during preservation of the silage, during mixing and possibly until the silage is used as fodder.

### DESCRIPTION OF EMBODIMENTS

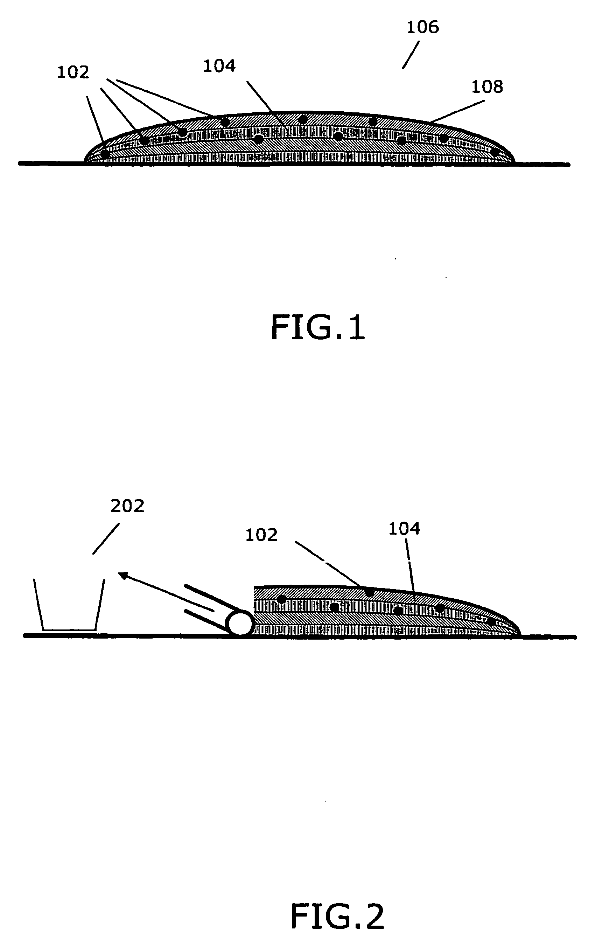

In FIG. 1 silage 104 has been transported from the field in transport wagons and has been offloaded and spread out in thin layers. Each layer has been compacted by a heavy tractor or similar and hereby a silage stack 106 is build. One or more sensor units 102 with one or more sensors for sensing physical and/or chemical characteristics of the silage, and a transmitter coupled to the one or more sensors for wirelessly transmitting the characteristics are placed in the silage during building of the silage stack.

After the sensor units 102 have been placed in the silage and the stack has been compacted, the silage stack is covered with an airtight sealing 108 to prevent oxygen from entering the silage stack and thereby starting a decomposition of the silage. The sensor units 102 are typically placed in the top and side area of the stack 106. Positioning the sensors in the top and/or side areas e.g. enables detection of any inappropriate amount of e.g. oxygen as close to and inside the sealing 108 of the silage stack in order e.g. to detect oxygen from outside the sealing as soon as possible.

The time from the silage stack 106 has been covered until the silage will be feet to animals, is of interest regarding the sensor unit 102, because in this phase the sensor unit will be monitoring physical and chemical characteristics related to the quality of the silage 104.

In this phase the silage 104 is going through fermentation and the monitored characteristics will give indications regarding the actual status of the silage and/or the silage stack and/or the sealing and can be used to notify a farmer about any irregularities and possibly also notify the farmer if there are damages to the sealing 108. As an example, damage to the sealing 108 can be detected due to changes in one or more of the sensed characteristics transmitted by one or more of the sensor units. The changes can be abrupt changes and/or changes which is normally not expected during the storage and preservation process.

In FIG. 2 it is illustrated that when the silage 104 is ready for use as feed, the silage 104 is loaded either to a mobile mixer 202 beside the stack or to a stationary mixer 202 near the stack. The methods of loading can be everything from using a normal shovel, to a specialized silage cutter or a miller loader that transports the silage directly to the mixer 202.

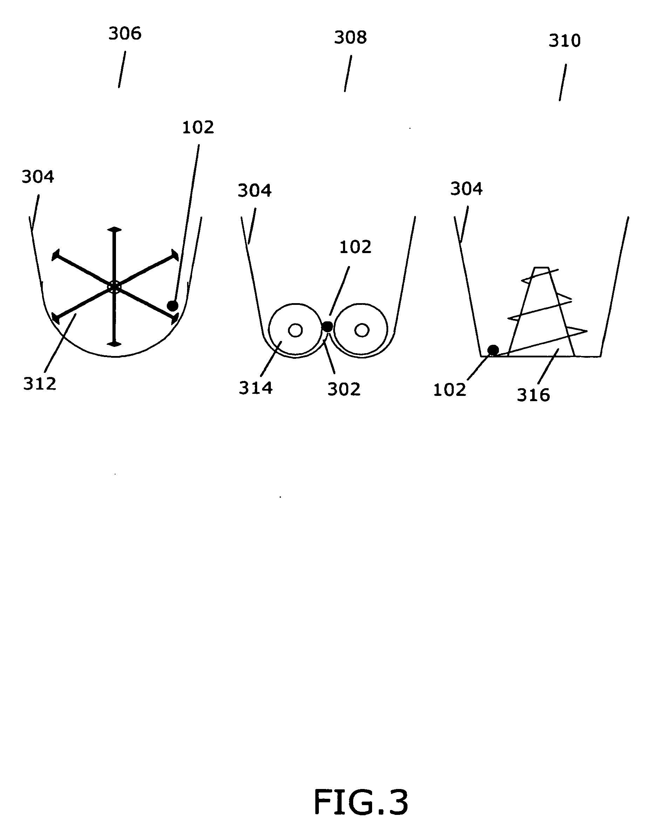

FIG. 3 shows three examples of different mixer types for decompacting the silage and possibly mixing the silage with further ingredients (not shown). The mixers can be mobile or stationary mixers and the mixer is typically of one of or a combination of three types of mixers; a paddle mixer 306, a horizontal 308 or a vertical mixer 310. The paddle mixer 306 includes a number of paddle arms 312 which decompact and/or separate the silage 104 (not shown in this figure) and stirs the silage and any further ingredients together. The horizontal mixer uses two horizontal worms 314 to provide this process whereas the vertical mixer has a number of vertical worms 316 that lifts the silage up for the silage to fall down beside the worms 316 in a repeated manner and in that way performing the process preparing the silage to be used as fodder or as coarse fodder. The worms 314, 316 and paddles arms 312 are also referred to as moving elements of the mixer whereas a wall 304 of the mixer may be referred to as a fixed element 304 of the mixer.

Common for all the mixer systems is a number of knifes positioned on the moving and/or the fixed elements in the mixer which knifes helps decompacting and separating the silage. These knifes are placed so that a sensor unit not suited by its size and/or its shape for this process would risk damage which could result in both a destruction of the sensor unit and in making it very difficult for an animal to avoid eating the damaged sensor unit or parts from the sensor unit.

If the animal is eating parts that the animal is not supposed to eat this can do damage to the animal. The compacting, decompacting, separating and/or mixing process of the silage may set out a preferred maximum size of the sensor unit. The last procedure for the sensor is to be separated from the silage. The animals may take care of this job in that the sensor has a size and/or shape that is not suited for eating. When the animals are finished eating, the sensor will hereby be left to collect on the feeding table or in a fodder trough.

In particular FIG. 3 shows that the sensor unit has a size and shape which is adapted so as to avoid the sensor unit from being damaged and/or trapped in the mixer, such as being trapped in and/or entering an opening, such as the opening 302 between a moving element and a fixed element within the worm mixer 308.

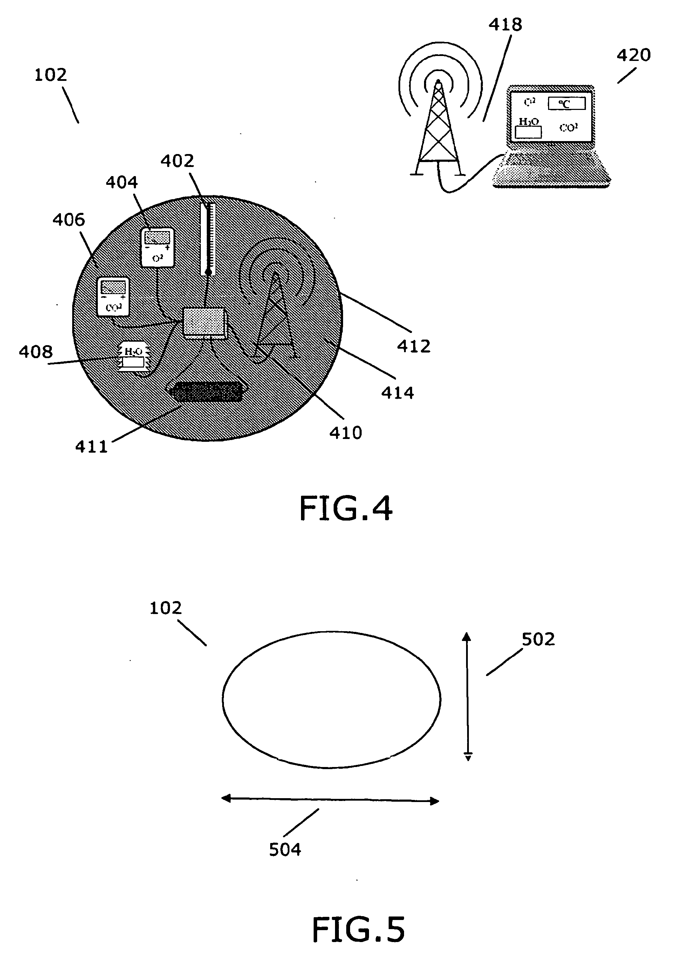

FIG. 4 shows a silage quality assurance and quality evaluation system 422 for quality monitoring, quality assurance and quality evaluation during storage and preparation of the silage 104. The system 422 includes one or more sensor units 102 and a receiver 418 for receiving wirelessly transmitted physical and/or the chemical characteristics sensed by one or more of the sensor units along with storage, computing and user interface means 420 for quality assurance and quality evaluation of the silage based on the characteristics sensed by one or more of the sensor units.

Furthermore FIG. 4 shows a schematic cross-sectional view of a sphere formed sensor unit 102 and a perspective view of devices 418, 420 for receiving and evaluating characteristics sensed and transmitted by the sensor unit. It can be seen from the figure that the sensor comprises one or more sensors for sensing one or more physical and/or chemical characteristics. The shown sensor unit includes a temperature sensor 402 and three gas sensors. These three sensors are in this example an oxygen sensor 404, a carbon oxygen sensor 406 and a humidity sensor 408.

It can be seen that the sensor unit also includes a transmitter 410 coupled to the one or more sensors 402, 404, 406, 408 for wirelessly transmitting the physical and/or the chemical characteristics. It can furthermore be seen that the sensor unit 102 may include powering means 411, such as a battery 411, for powering the sensors and the transmitter.

The sensors, transmitter and powering means may be provided within a sensor cabinet 412 but may also or alternatively only be embedded in one or more materials 414 forming the sensor unit. The one or more materials 414 for forming the sensor unit and/or the cabinet are preferably provided in an impact proof material such as synthetic material while still allowing for wireless transmittal of sensed characteristics.

In order for the sensor unit also to be able to sense the characteristics, the cabinet 412 and/or the one or more materials 414 for forming the sensor unit may be provided with one or more holes (not shown). Alternatively or additionally to providing the one or more holes, the material forming the sensor unit 102 and/or the cabinet 412 may be provided in a material through which material the characteristics can be sensed without providing additional holes.

FIG. 5 illustrates a sensor unit 102 with an oval or egg formed cross-section. In particular the figure illustrates that the sensor unit 102 should have a minimum dimension 502 and a maximum dimension 504. The minimum dimension is fitted in order for the sensor unit not to be damaged during decompacting and possibly mixing of the silage while also considering that the sensor unit should preferably also be so big that that an animal, such as a cow, would not swallow and/or eat the sensor unit.

It has been found that a diameter larger than approximately 0,02m of a sphere formed sensor unit fulfils these needs. Preferably a maximum dimension of the sensor unit is 0,10m in order e.g. for the sensor unit to withstand pressure during the compacting process of the layers in the silage stack.

It is shown that the outer shape of the sensor unit only has soft and/or smooth outer contours and no sharp edges. Furthermore the figure illustrates that the surface of the sensor unit is smooth and that no part of the sensor is able to attach to the silage in a hook like way. In order for the sensor unit to be easy detectable with an eye a colour of the sensor unit should preferably be different from a typical brown or green or green-brown colour of silage or of silage with the further ingredients. Such colour could be red, yellow or the like colours.

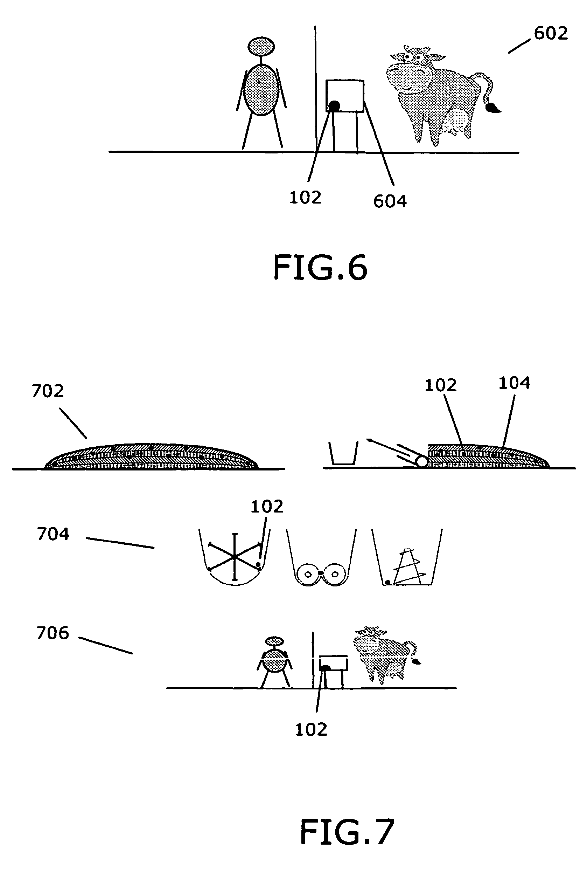

FIG. 6 shows the sensor unit 102 which has been provided within the silage during storage and preparation of the silage and which is ending unbroken in a fodder trough 604 for collection. During this period the sensor unit 102 has preferably not been handled directly by humans. An animal 602 has been feed silage with the sensor units still provided in the silage, but the animal has due to the size and/or the shape of the sensor unit not swallowed the sensor unit. By eating the silage and not swallowing the sensor unit the animals sorts out the sensor unit which can then easily be collected. The collected sensor units may be collected for reuse or for environmentally appropriate destruction.

FIG. 7 illustrates a method of monitoring a silage process by embedding the silage 104 with sensor units 102 from a time of preservation of the silage 104, during mixing and until and/or while the silage is used as fodder. In particular the figure illustrates providing 702 the silage 104 storage with one or more sensor units 102 for sensing one or more physical and/or the chemical characteristics of the silage during storage and the figure shows decompacting 704 and possibly mixing the silage 104 and the one or more sensor units 102 with further ingredients in a decompacting process provided after storing the silage, and thereafter sorting out 706 the one or more sensor units unbroken after the decompacting process.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. Method of wirelessly sensing physical and/or chemical characteristics of silage with a wireless silage sensor unit (102) in order to determine a quality of the silage (104), the method comprising
- providing (702) the silage (104) with one or more sensor units (102), and
- sensing one or more physical and/or the chemical characteristics of the silage (104) with the sensor unit (102) during a conservation period of the silage (104), and
- wirelessly transmitting the one or more physical and/or the chemical characteristics of the silage (104) in order to determine the quality of the silage (104), and
- decompacting (704) and possibly mixing (704) the silage (104) and the one or more sensor units (102) with further ingredients in a decompacting process, and
- sorting out (706) the one or more sensor units (102) unbroken after the decompacting process.

2. The method according to claim 1, wherein sorting out the one or more sensor units unbroken after the decompacting process (704) comprises collecting the one or more sensor units (102) from fodder troughs (604) or at similar positions where animals (602) eat.

3. The method according to claim 1 or 2, wherein sorting out the one or more sensor units unbroken after the decompacting process (704) comprises collecting the one or more sensor units (102) in a part of the decompacting equipment.

4. The method according to any of the preceding claims, further comprising reusing one or more sensor units (102) in order to determine a quality of the silage (104) of further batches of silage.

5. The method according to claim 1, wherein the quality of the silage (104) is determined by a silage quality assurance and quality evaluation system by receiving the wirelessly transmitted physical and/or the chemicai characteristics of the silage and using a storing, computing and user interface means (420) for quality assurance and quality evaluation of the silage based on the physical and/or the chemical characteristics sensed by the one or more sensor units (102).

## Patentansprüche

1. Verfahren zum drahtlosen Erfassen von physikalischen und/oder chemischen Eigenschaften von Silage mit einer drahtlosen Sensoreinheit (102) zur Bestimmung der Qualität der Silage (104), wobei das Verfahren umfasst
- Bereitstellen (702) von einer oder mehreren Sensoreinheiten (102) für die Silage (104) und
- Erfassen von einer oder mehreren physikalischen und/oder der chemischen Eigenschaften der Silage (104) mit der Sensoreinheit (102) während der Konservierungsdauer der Silage (104) und
- drahtloses Übertragen der einen oder mehreren physikalischen und/oder der chemischen Eigenschaften der Silage (104) zur Bestimmung der Qualität der Silage (104) und
- Lockern (704) und möglicherweise Vermischen (704) der Silage (104) und der einen oder mehreren Sensoreinheiten (102) mit weiteren Bestandteilen in einem Lockerungsverfahren und
- Aussortieren (706) der einen oder mehreren Sensoreinheiten (102) ohne Beschädgung nach dem Lockerungsverfahren.

2. Verfahren nach Anspruch 1, wobei das Aussortieren der einen oder mehreren Sensoreinheiten ohne Beschädigung nach dem Lockerungsverfahren (704) das Einsammeln der einen oder mehreren Sensoreinheiten (102) an den Futtertrögen (604) oder ähnlichen Stellen, an denen Tiere (602) fressen, umfasst.

3. Verfahren nach Anspruch 1 oder 2, wobei das Aussortieren der einen oder mehreren Sensoreinheiten ohne Beschädigung nach dem Lockerungsverfahren (704) das Einsammeln der einen oder mehreren Sensoreinheiten (102) an einer Stelle der Lockerungsvorrichtung umfasst.

4. Verfahren nach einem der vorhergehenden Ansprüche, weiterhin umfassend die Wiederverwendung von einer oder mehreren Sensoreinheiten (102) zur Bestimmung der Qualität der Silage (104) weiterer Silagechargen.

5. Verfahren nach Anspruch 1, wobei die Qualität der Silage (104) mithilfe eines Systems zur Qualitätssicherung und Qualitätsbewertung von Silage durch Empfangen der drahtlos übertragenen physikalischen und/oder der chemischen Eigenschaften der Silage und unter Verwendung eines Speicher-, Rechen- und Benutzerschnittstellenmittels (420) zur Qualitätssicherung und Qualitätsbewertung der Silage auf der Grundlage der von der einen oder mehreren der Sensoreinheiten (102) erfassten physikalischen und/oder chemischen Eigenschaften bestimmt wird.

## Revendications

1. Méthode de détection sans fil de caractéristiques physiques et/ou chimiques de fourrage ensilé au moyen d'un détecteur (102) sans fil de fourrage ensilé afin de déterminer une qualité du fourrage ensilé (104), la méthode comprenant
- mise en place (702) dans le fourrage ensilé (104) d'un ou de plusieurs détecteurs (102), et
- détection d'une ou de plusieurs caractéristiques physiques et/ou chimiques du fourrage ensilé (104) au moyen du détecteur (102) pendant une période de conservation du fourrage ensilé (104), et
- transmission sans fil des une ou plusieurs caractéristiques physiques et/ou chimiques du fourrage ensilé (104) afin de déterminer la qualité du fourrage ensilé (104), et
- décompactage (704) et éventuellement mélange (704) du fourrage ensilé (104) et des un ou plusieurs détecteurs (102) avec d'autres ingrédients dans un processus de décompactage, et
- tri (706) des un ou plusieurs détecteurs (102) intacts après le processus de décompactage.

2. La méthode selon la revendication 1, dans laquelle le tri des un ou plusieurs détecteurs intacts après le processus de décompactage (704) comprend la récupération des un ou plusieurs détecteurs (102) dans des auges à fourrage (604) ou à des emplacements similaires où les animaux (602) s'alimentent.

3. La méthode selon la revendication 1 ou 2, dans laquelle le tri des un ou plusieurs détecteurs intacts après le processus de décompactage (704) comprend la récupération des un ou plusieurs détecteurs (102) dans une partie de l'équipement de décompactage.

4. La méthode selon l'une quelconque des revendications précédentes, comprenant en outre la réutilisation d'un ou plusieurs détecteurs (102) afin de déterminer la qualité du fourrage ensilé (104) dans d'autres lots de fourrage ensilé.

5. La méthode selon la revendication 1, dans laquelle la qualité du fourrage ensilé (104) est déterminée par un système d'assurance qualité et d'évaluation de la qualité par réception des caractéristiques physiques et/ou chimiques du fourrage ensilé transmises sans fil et utilisation d'un moyen de stockage, de calcul et d'interface utilisateur (420) pour l'assurance qualité et l'évaluation de la qualité du fourrage ensilé sur la base des caractéristiques physiques et/ou chimiques détectées par les un ou plusieurs détecteurs (102).
